# EUROPEAN PATENT APPLICATION

(11) **EP 1 300 528 A1**
(43) Date of publication of application: **09.04.2003**
(21) Application number: 01830620.9
(22) Date of filing: 02.10.2001
(51) Int. Cl.: E04F 21/28, B23P 19/04, E04F 21/00

(54) **Apparatus for applying gaskets to fittings such as windows and doors**

(71) Applicant: Pedrotti, Silvio, 38073 Cavedine (Trento) (IT)
(72) Inventor: Pedrotti, Silvio, 38073 Cavedine (Trento) (IT)
(74) Representative: Lanzoni, Luciano

(57) **Abstract**

Apparatus for applying gaskets to fittings (4) such as windows and doors having a peripheral seat (5), characterised in that it comprises a frame (2) whereto are operatively associated a support for stably sustaining a fitting (4) whereto the gasket (6) is to be applied and at least an insertion head (7). The apparatus (1) further comprises first means (9) for actuating said insertion head (7) on the frame (2) along a first direction parallel to the support (3) and second means (10) of actuation of the head (7) on the frame (2) along a second direction perpendicular to the first direction and parallel to the support (3). The insertion head (7) comprises means (21) for inserting the gasket (6) in the peripheral seat (5) in correspondence with an insertion point (22), and cutting means for cutting the gasket (6). The apparatus (1) further comprises means (33) for continuously feeding a gasket (6) to the insertion means (21), detection means (52) to determine the position of the head (7) relative to the fitting (4) and means (23) for rotating said head (7) about an axis of rotation perpendicular to the support (3) and passing through the insertion point (22). To the first and second actuation means (10), to the rotation means (23), to the feeding means (33), to the detection means (52), and to the cutting means, is operatively connected an electronic control unit (65) able to command the operation of the apparatus (1) according to a predefined programming.

## Description

The present invention relates to an apparatus for applying gaskets to fittings such as windows and doors.

In the past few years, widespread use has been made of fittings, be they windows, outer doors or inner doors, provided with rubber gaskets inserted in appropriate perimeter seats obtained on their movable wings.

Such gaskets are interposed between the frame and the wings when the latter are closed.

Although it entails higher costs, this is justified by a plurality of reasons.

Firstly, the use gaskets allows a better insulation of the internal environment from the external one, both in regard to noise and in regard to cold and weather (rain).

Additionally, in many cases the fittings are painted with water-based paints, which entails the hazard that the two surfaces (frame and wing), placed in contact under give environmental conditions for a certain period of time, may mutually adhere. This hazard is avoided by interposing the gaskets.

Currently, the gaskets are mounted on a fitting mainly manually, by specialised workers.

However, this entails a series of drawbacks.

In the first place, to obtain a mounting of good quality, the worker must be specialised; consequently, upon his/her hiring a certain training period is required and, if the worker normally entrusted with this task, the work cannot be executed by another worker and still comply with quality and production standards.

The main drawback that may emerge during the manual mounting of the gaskets is closely linked to their elasticity.

Since the mounting operation is conducted inserting a continuous gasket unwound from a reel, along the whole perimeter of the fitting, and cutting it at the end in such a way as to make the initial and the final edge coincide, if during the mounting operation the operator subjects the gasket to a tension, the latter yields elastically, becoming elongated.

Once the gasket is inserted in the seat, the latter hinders its elastic return, with the consequence that the gasket is cut when it is deformed and hence in fact shorter than the seat.

In the long run however the gasket returns to the resting position, sliding inside the seat. But this can take place when the fitting has been in use for some time and its consequence is the appearance of a space lacking a gasket between the two ends thereof.

Furthermore, even when fastening staples are used to keep the terminal edges close, if during the mounting operation the gasket was accidentally elongated, areas in which the gasket has lower thickness and hence poorer watertightness are created (elongation in one direction causes a thinning in the perpendicular direction).

In this situation, the technical task at the basis of the present invention is to obtain an apparatus for applying gaskets to fittings, that overcomes the aforementioned drawbacks.

In particular, a technical task of the present invention is to obtain an apparatus for applying gaskets to fittings, which allows the automatic application of the gaskets on one or more seats present on a fitting, with no need for intervention by specialised operators, whilst guaranteeing a constant quality of installation over time.

Yet another technical task of the present invention is to provide an apparatus for applying gaskets to fittings, which allows the precise application of the gaskets with no risk of their deformation.

The specified technical task and the indicated aims are substantially achieved by an apparatus for the application of gaskets to fittings as described in the accompanying claims.

Further characteristics and advantages of the present invention shall become more readily apparent from the detailed description that follows, of a preferred but not exclusive embodiment of an apparatus for applying gaskets to fittings, illustrated in the accompanying drawings, in which:

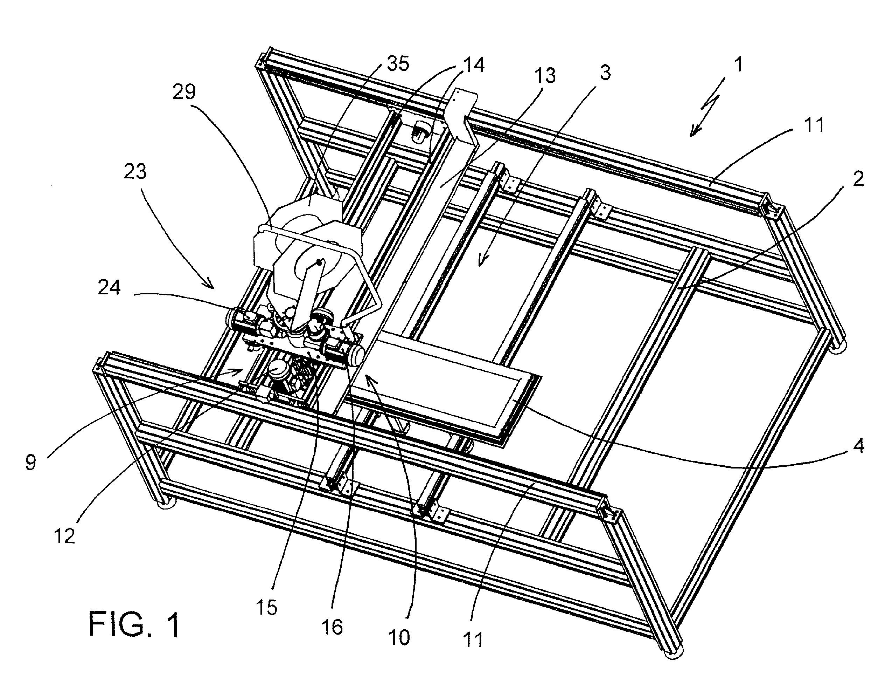

- Figure 1 shows a top axonometric view of an apparatus according to the present invention;

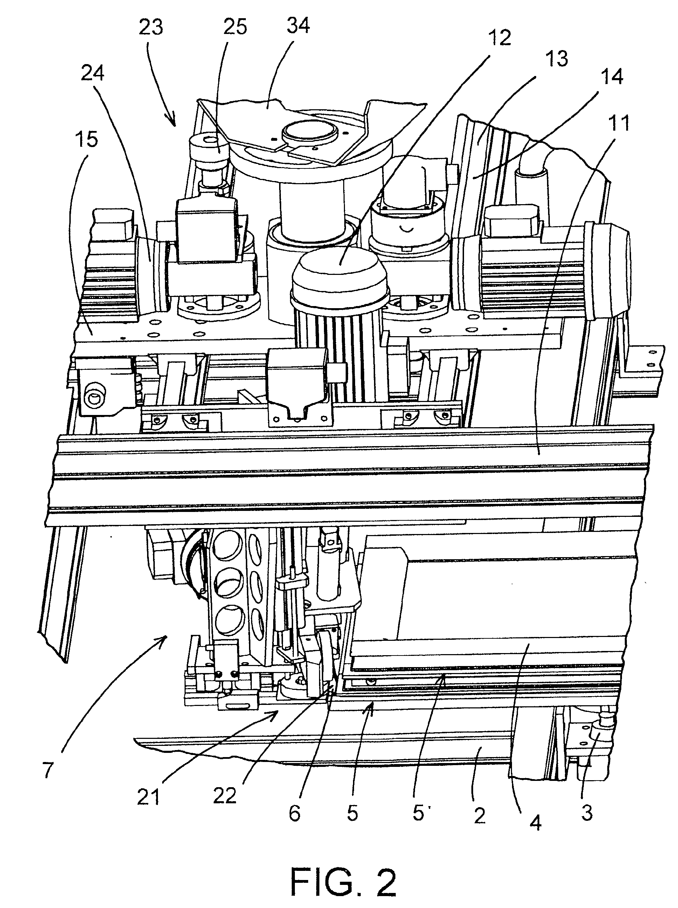

- Figure 2 shows an axonometric view of a detail of the apparatus of Figure 1 in correspondence with the working area;

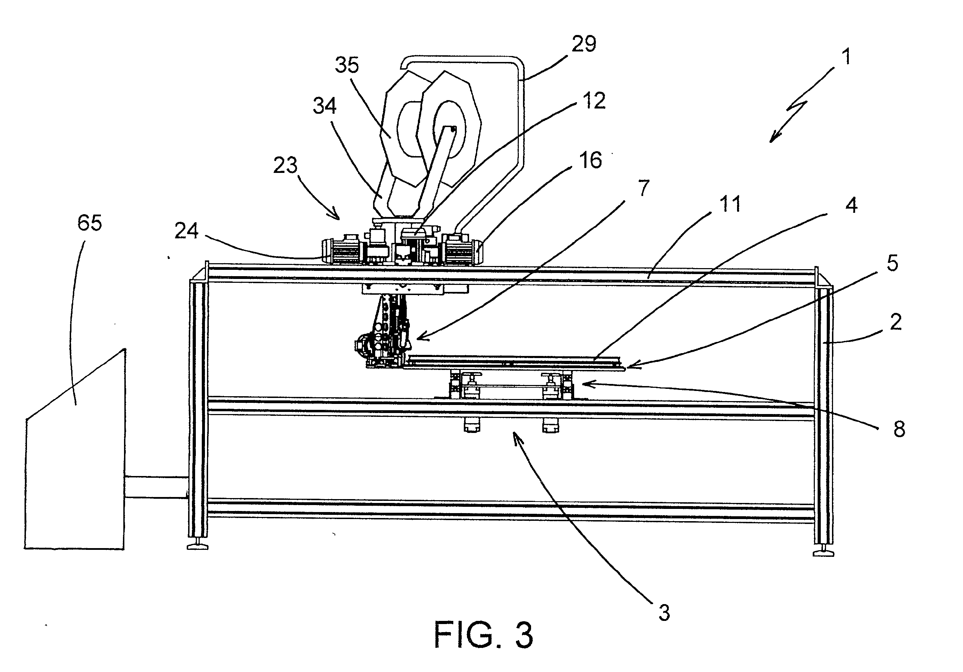

- Figure 3 shows a lateral view of the apparatus of Figure 1 with an additional detail constituted by an electronic control unit;

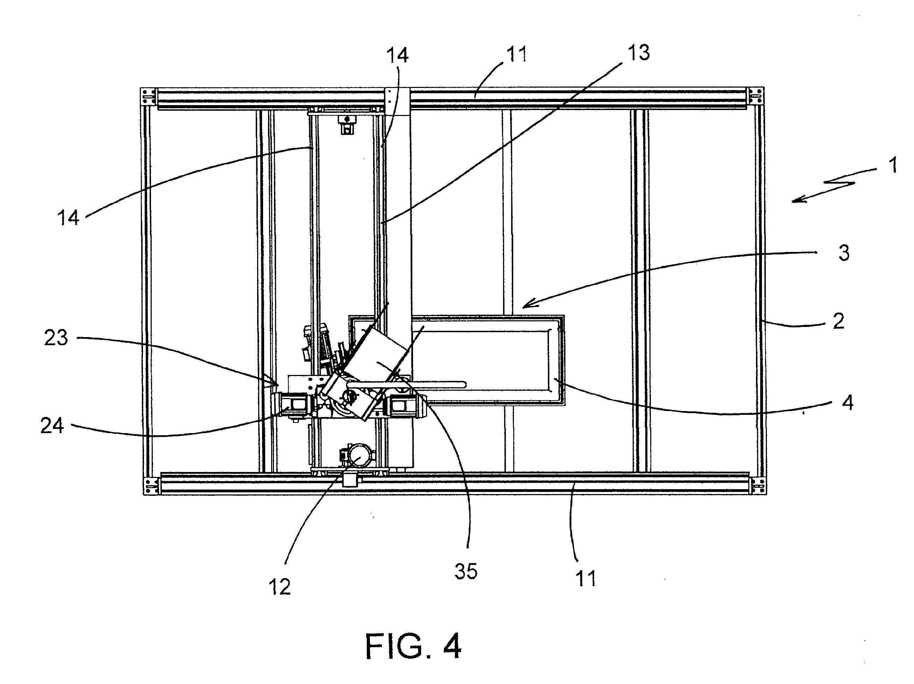

- Figure 4 shows a plan view of the apparatus of Figure 1;

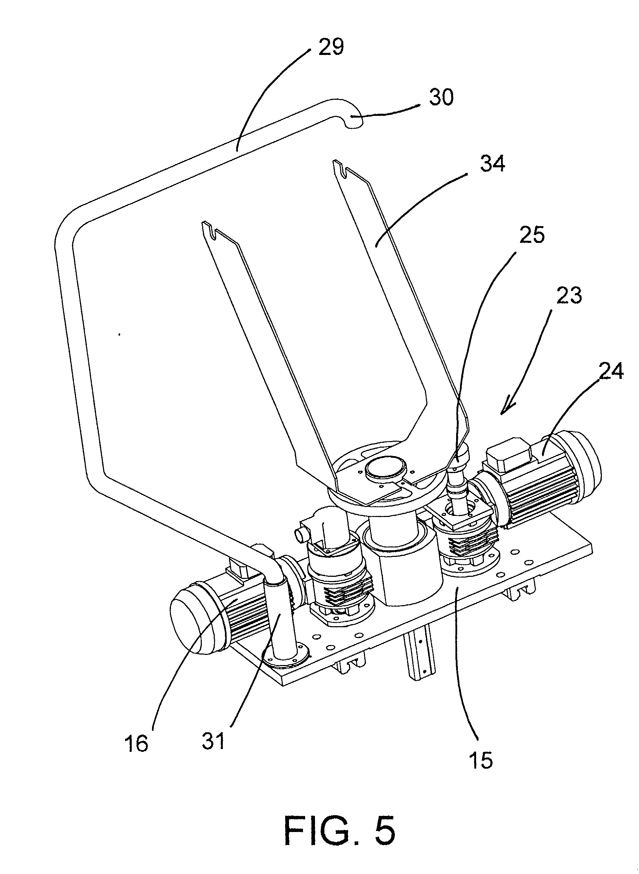

- Figure 5 shows a detail of the apparatus of Figure 1 with some parts removed, the better to highlight others;

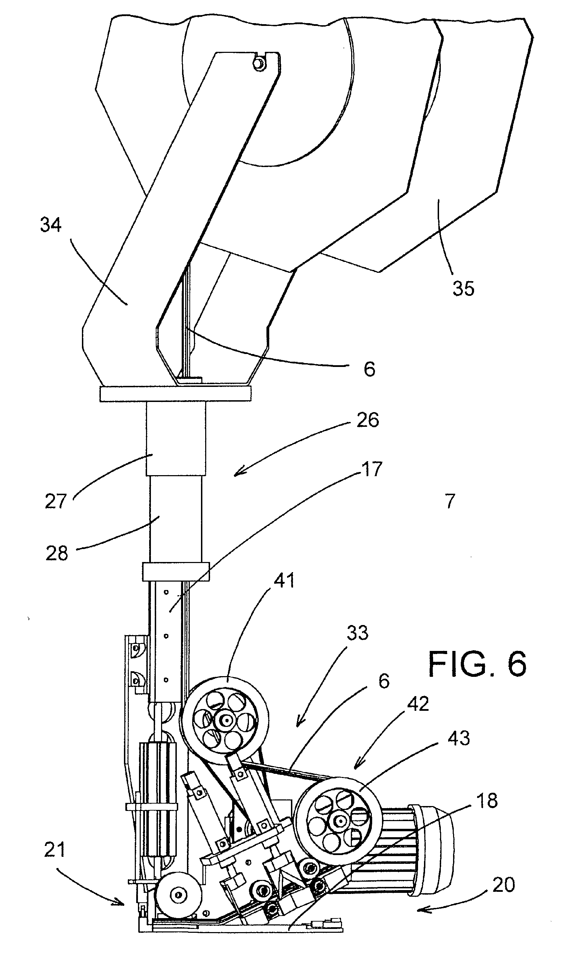

- Figure 6 shows an additional detail of the apparatus of Figure 1 with some parts removed, the better to highlight others;

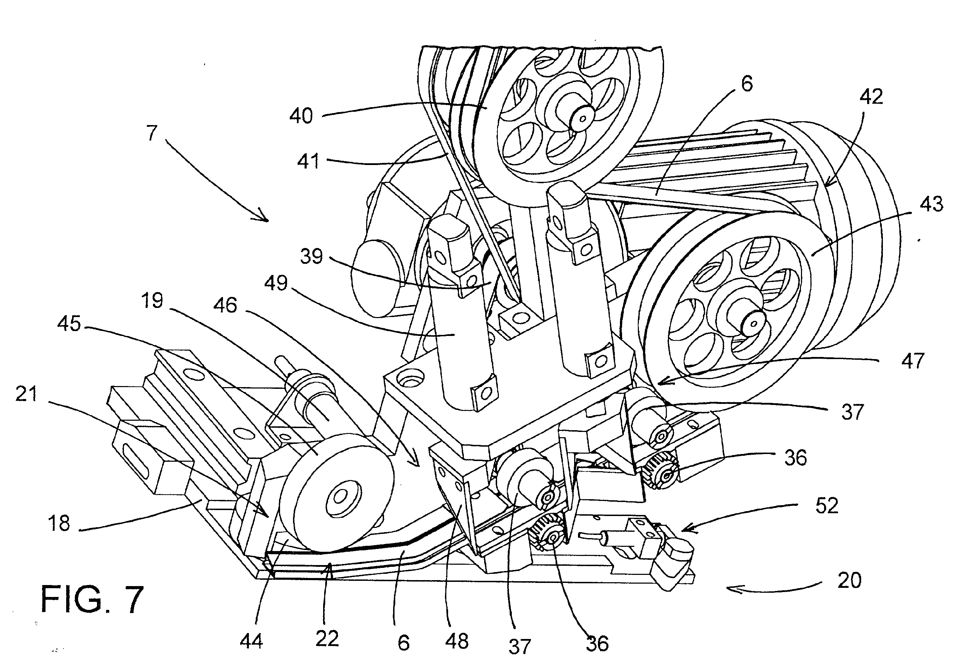

- Figure 7 shows an axonometric view of a detail of the apparatus of Figure 1 with some parts removed, the better to highlight others;

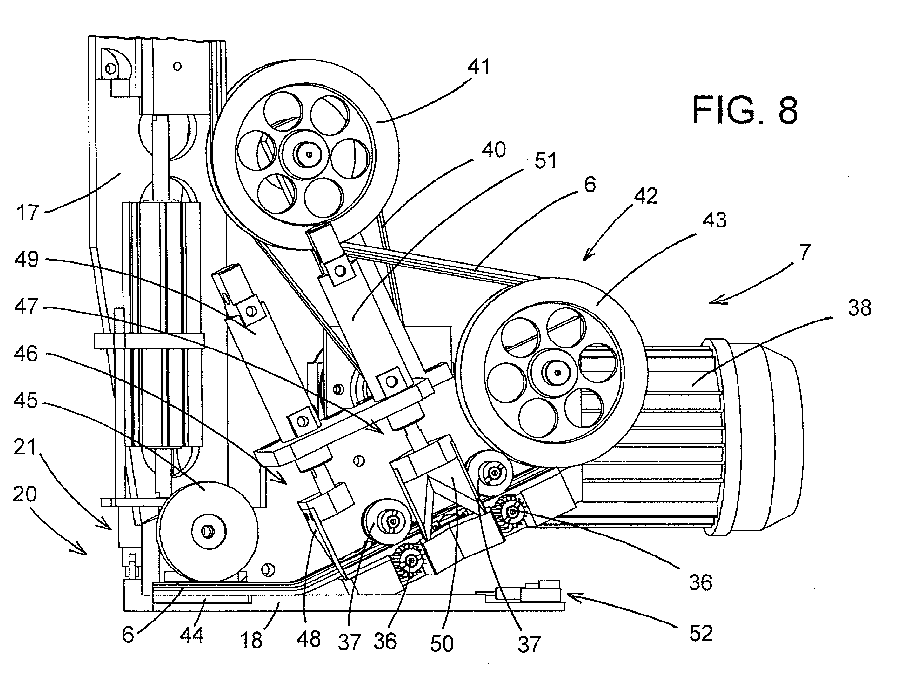

- Figure 8 shows a front elevation view of the detail of Figure 7;

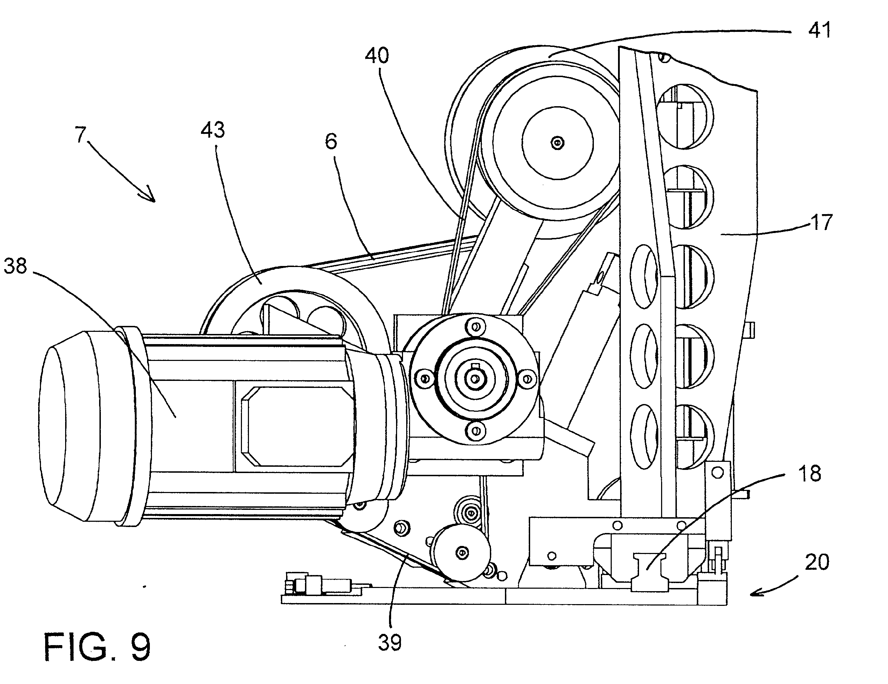

- Figure 9 shows a rear elevation view of the detail of Figure 7;

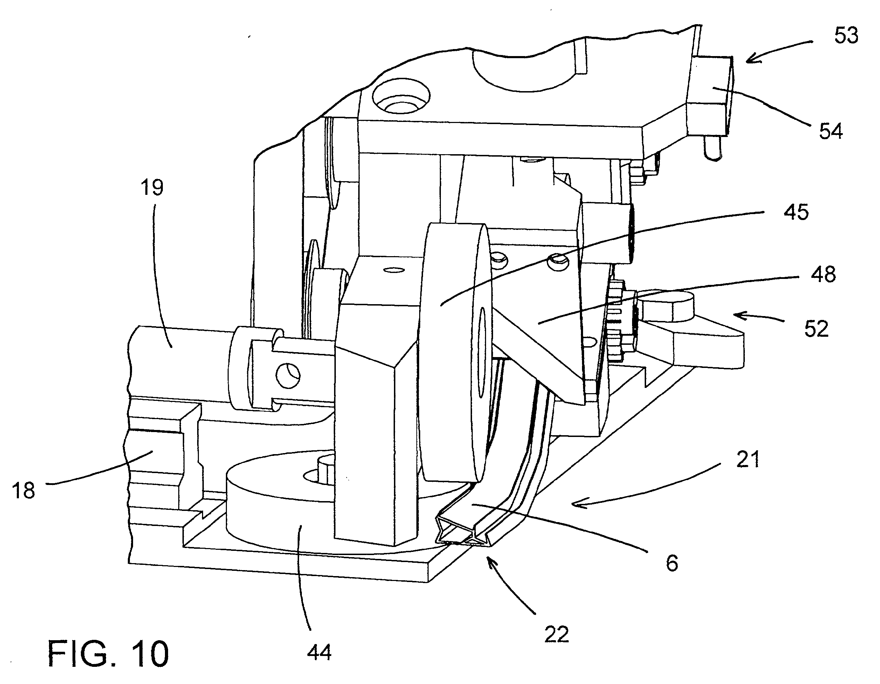

- Figure 10 shows an enlargement of a part of the detail of Figure 7;

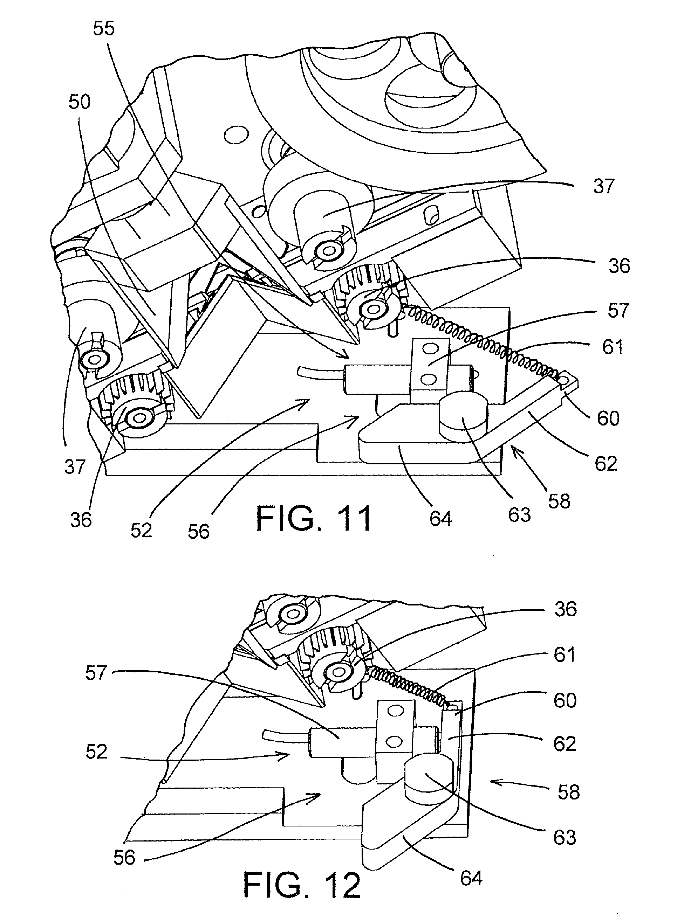

- Figure 11 shows an axonometric view of an enlargement of part of Figure 7 with a sensor in the foreground;
- Figure 12 shows the sensor of Figure 11 in a second position.

With reference to the aforementioned figures, the number 1 globally indicates an apparatus for applying gaskets to fittings, according to the present invention.

The apparatus 1 comprises a frame 2 whereto are operatively associated a support 3 able stably to support a fitting 4 having at least an appropriate seat 5 whereto the gasket 6 is to be applied, and at least an insertion head 7 of the gasket 6.

Advantageously, the support 3 is an integral part of the frame 2, as shown in the accompanying figures, in which the support 3 defines a horizontal plane of bearing for the fitting 4.

The support 3 can then be provided with means 8 for holding the fitting 4 in such a way as to guarantee its stable positioning during the insertion of the gasket 6.

The illustrated embodiment comprises a support 3 whereon the fittings 4 must be positioned manually, but in other embodiments the apparatus 1 is also provided with an automatic system for transporting the fittings 4 on the support 3 by means, for example, of a conveyor belt, and in yet other embodiments the support 3 is constituted by a conveyor belt able to advance in predefined steps, in such a way as to bring a fitting 4 at a time in correspondence with the position of insertion of the gasket 6.

The apparatus 1 further comprises first means 9 for actuating the insertion head 7 on the frame 2 along a first direction parallel to the support 3, and second means 10 for actuating the head 7 on the frame 2 along a second direction perpendicular to the first direction and parallel to the support 3. In the illustrated case, said direction of motion are therefore horizontal, but they could be any as long as they are parallel to the plane of lay of the fitting 4 defined by the support 3.

In particular, in the preferred embodiment, the first actuation means 9 comprise a first longitudinal guide 11 developing perpendicularly to said first direction and mounted on said frame 2, and a first motor 12, whilst the second actuation means 10 comprise a first carriage 13 mounted able to slide on the first guide 11, and a second longitudinal guide 14 mounted on the first carriage 13.

The second guide 14 develops parallel to the second direction, and thereon the head 7 is mounted able to slide by means of a second carriage 15.

The second actuation means 10 further comprise a second motor 16 operatively active on the second carriage 15 to move it along the second guide 14.

Similarly the first motor 12 is operatively active on the first carriage 13 and moves it along the first guide 11.

Both the first and the second motor 12, 16 are meshed on appropriate racks integral with the related guides 11, 14.

Preferably, to increase the productive capacity of the apparatus 1 of the present invention, both the first and the second motor 16 are variable velocity motors.

In the illustrated embodiment, the insertion head 7 is constituted by a load-bearing part 17 associated to the second carriage 15, and by an operative part 18 mounted on the load-bearing part 17. Between the two parts 17, 18 are interposed elastic damping means 19 in order to allow the actuation of the operative part 18 relative to the load-bearing part 17 parallel to the support 3.

In particular, the head 7 develops below the first and second carriage 13, 15, and, in proximity to its own lower part 20 is provided with means 21 for inserting the gasket 6 in the peripheral seat 5, which identify an insertion point 22.

The disposition of the insertion means 21 in the position farthest away from the first and second carriage 15 and closest to the fitting 4 allows an easier mounting of the gasket 6, since the head 7 can be actuated more freely about the fitting 4.

The apparatus 1 further comprises means 23 for rotating the head 7 about an axis of rotation perpendicular to the support 3 and passing through the insertion point 22 of the gasket 6.

In the illustrated embodiment said rotation means 23 are associated to the second carriage 15, and comprise a third motor 24 that allows the rotation of the head 7 relative to the second carriage 15 through an appropriate transmission 25.

In its more complete embodiment, the apparatus 1 further comprises third actuation means 26 that allow the head 7 to move along a third direction parallel to the axis of rotation, which in the illustrated configuration corresponds to a vertical displacement.

The third actuation means 26 are constituted by a hydraulic or pneumatic cylinder 27 connected between the head 7 and the second carriage 15 and by a central guidance cylinder 28 whereon the head 7 can slide.

The axis of said guidance cylinder 28 corresponds to the axis of rotation of the head 7.

Advantageously, said guidance cylinder 28 is telescopic and hollow so as to allow the passage therein both of the electrical connections, and of hydraulic and/or pneumatic connections (not shown herein) that have to be brought to the insertion head 7.

In order precisely to route said connection in the guidance cylinder 28, a tube 29 for orienting the connections with a first end 30 placed substantially aligned with the guidance cylinder 28, and a second end 31 fastened to the second carriage 15.

The orienting tube 29 is shaped in such a way as not to hamper the operation of the apparatus 1.

Appropriate folding cable holder ducts 32 (not shown) are provided to carry all hydraulic, pneumatic and electrical connections to the second carriage 15.

On the apparatus 1 are further provided means 33 for the continuous feeding of a gasket 6 to the insertion means 21. Said feeding means 33 comprise a support 34 for a known reel 35 of gasket 6.

In the illustrated embodiment the support 34 is mounted on the second carriage 15 and it is integral with the head 7, but in other embodiments the support 34 is integral with the second carriage 15, or it may be constituted by a separate structure, fixed relative to the frame 2.

In the illustrated case the pipe 29 for orienting the conduit is shaped in such a way as to avoid interference with the support 34 during the rotation thereof.

The feeding means 33 further comprise at least a motorised driving roller 36, which may smooth, knurled, with needles or of any other type. In the preferred embodiment, there are two driving rollers 36, and each thereof is coupled to an idle counter-roller that allows a better gripping action on the gasket 6.

The actuation of the driving rollers 36 is performed by a fourth motor 38 integral with the head 7, through an appropriate first transmission belt 39. In the illustrated embodiment to the fourth motor 38 is connected with a second belt 40 also an unwinding pulley 41 that acts in synchrony with the driving rollers 36 to unwind the gasket 6 from the reel 35.

Also provided are means 42 for tensioning the gasket 6, able to keep the gasket 6 appropriately taut, though avoiding any deformations thereof (elongation).

In the embodiment described herein, said tensioning means 42 are constituted by a second idle pulley 43.

The gasket 6 made to advance by the feeding means 33 reaches the insertion means 21 which in the illustrated embodiment comprise at least a first idle roller 44 fastened to the head 7 with its axis parallel to the axis of rotation.

To improve the insertion action, a second idle roller 45 is also provided, positioned with its axis perpendicular to that of the first idle roller 44 able to orient superiorly the gasket 6.

The insertion head 7 further comprises first and second cutting means 46, 47 to cut the gasket 6.

The first cutting means 46 comprises a shear 48 operated by a first pneumatic cylinder 49, positioned between the second driving 36 roller 45 and the insertion means 21, and they allow to shear the gasket 6 at the end of the insertion operation.

The second cutting means 47 allow instead to make a "V" shaped incision on the gasket 6 in correspondence with the segment of gasket 6 that is to be applied astride the edge of the fitting 4.

The second cutting means 47 are located between the first and the second driving 36 roller 45, and are composed by a "V" shaped blade actuated by a second pneumatic cylinder 51.

Advantageously, both the first and the second pneumatic cylinder 49, 51 move at a far greater speed than the speed of advance of the gasket 6, so they can be actuated with a fast to and fro motion, without having to slow the advance of the gasket 6.

The apparatus 1 is further provided with detection means 52 to determine the position of the head 7 relative to the fitting 4 whereto the gasket 6 is to be applied.

In particular the detection means 52 are distinguished in a first sensor 53 (in the illustrated example the first sensor 53 constituted by a photoelectric cell 54) mounted on the head 7 and operatively active to indicate the presence of the fitting 4 in proximity to the insertion means 21, and in a second sensor 55 operatively mounted on the head 7 and operatively active to signal the reaching of the end of the edge of the fitting 4 whereon the gasket 6 is being applied.

The second sensor 55 is constituted by a feeler pin 56 which comprises a fixed contact detector 57 and an element 58 for tracking the edge pivotally engaged in its own intermediate portion 59 to the operative part 18 of the head 7, and movable between a position of presence of the edge of the fitting 4 and a position of absence of the edge of the fitting 4.

A first end 60 of the tracking element 58 is connected to a return spring 61 which tends to maintain a first portion 62 of the element 58 positioned between the first end 60 and the pivot point 63, abutting against the contact detector 57 (position of absence of the edge of the fitting). Correspondingly the second end 64 of the tracking element 58 projects from the head 7.

In the position of presence of the edge of the fitting 4 the second end 64 of the tracking element 58 is instead maintained recessed inside the bulk of the head 7 by the fitting 4 which acts abutting against it. Consequently the first portion 62 of the tracking element 58 is not in contact with the detector 57.

The first and second actuation means 9, 10, the rotation means 23, the feeding means 33, the detection means 52, the cutting means 46, 47, and every other part of the apparatus 1 are operatively connected to an electronic control unit 65 that commands the operation of the apparatus 1 according to a predefined programming, as shall be explained in detail farther on.

Means (not shown herein) are also provided for controlling the speed of the individual motors (such as encoders), appropriately connected to the unit 65.

Although they are not shown in the accompanying figures, further possible equipment items are provided for the apparatus 1 of the present invention.

For instance, the adoption is provided of a nozzle supplied with compressed air and located in proximity to the second cutting means 47 to remove the "V" shaped pieces from the working area.

Further provided, for certain applications, are means for lubricating the gasket 6 positioned in proximity to the insertion means 21, as well as a staple shooting device to fasten the two ends of the gasket 6.

In the illustrated embodiment, four different motors 12,16,24,38 are used for the different actuation requirements. However, fewer motors with appropriate mechanical transmissions, or hydrostatic actuation system, can be used.

In the case of electric motors, it is possible to use asynchronous, direct current, or brushless motors.

For a better synchronisation of the movements in the presence of multiple motors, it may be advantageous to identify a main motor, and to operate the others based on the operation thereof.

The embodiment described so far is preferably usable for rectangular fittings 4 with mutually perpendicular edges.

In the apparatus 1 described herein the actuation of the head 7 takes place more easily if the movements of the head 7 can be alternated according to the first direction and the second direction.

The present invention can in any case be applied to differently shaped fittings 4 providing appropriate means for actuating and tracking the edge.

If an apparatus 1 according to the present invention is to be used to apply two or more mutually different gasket on a same fitting 4, the apparatus 1 can be provided with a number of heads 7 equal to the number of different gaskets, said heads 7 being actuated one after the other.

For instance, in the case of two heads 7, both heads are mounted on the first guide 11, each by means of a first carriage 13.

In regard to the operation of the apparatus 1, it descends directly from the programming of the electronic control unit 65.

Hereafter a preferential operation is described, but the programming can be changed freely depending on requirements.

Initially a fitting 4 is placed manually or automatically on the support 3 and locked thereon with its edges parallel to the first and second direction of actuation.

In the illustrated case the fitting 4 is positioned with its edges parallel to the first or to the second direction of motion of the head 7.

In the meantime the head 7 remains in a resting position corresponding to an end stop both of the first and of the second guide 14.

Subsequently the head 7 is moved along the second direction until reaching a pre-set cycle start position.

If necessary the head 7 can then be rotated until the means of insertion 21 face the seat 5, whereupon the head 7 is made to advance along the first direction until it is brought in contact with the fitting 4.

Moreover, the position of the head 7 along the third direction can be varied in such a way that the insertion point is coplanar with the seat 5.

Said height can be pre-set during installation, since it does not change for a given type of fitting 4.

The head 7 is actuated rapidly as long as the fitting 4 is distant, i.e. until the photoelectric cell 54 signals its presence.

When the photoelectric cell 54 signals the presence of the fitting 4, the speed of the head 7 is decreased, until it is stopped in contact with a first edge of the fitting 4.

The reaching of the contact condition is signalled by the feeler pin 56 which comes in contact against the fitting 4 itself.

After the contact, the operative part 18 and the load-bearing part 17 of the head 7 are approached, thanks to the action of the damping means 19.

At this point the gasket 6 is fed to the insertion means 21 making it advance towards them by means of the driving rollers 36.

When the gasket 6 arrives in correspondence with the insertion point, the head 7 is actuated according to the second direction, making it follow the first edge of the fitting 4 and simultaneously the gasket 6 is fed to the insertion means 21 with a speed equal to the actuation speed of the head 7.

The feeler pin 56, which is upstream (with reference to the direction of advance of the head 7 along the fitting) relative to the insertion means 21, remains pressed by the edge as long as it is present and it signals it to the unit 65. The latter then activates the second motor 16 at high speed.

When the feeler pin 56 reaches the edge of the fitting 4 it is no longer pressed by anything and it signals to the unit 65 the approach of the edge to the insertion means 21.

The unit 65 then slows the second motor 16 until it stops the head 7 when the insertion point is in correspondence with the edge.

This is obtained based on the knowledge both of the distance between the feeler pin 56 and the insertion point (constant value for a given apparatus 1) and of the speed of advance of the head 7 relative to the fitting 4.

During the phase of approach to the edge, the unit 65 also commands the operation of the second cutting means 47 to make the "V" shaped incision on the segment of gasket 6 to be positioned in correspondence with the edge. If it is present, the pneumatic nozzle is also operated to remove the "V" shaped piece of gasket 6 from the insertion area.

In particular, the "V" shaped incision can be at a right angle and extend from one side of the gasket 6 to a position in proximity to the other side, still leaving a small portion of gasket 6 intact.

At this point the head 7 is rotated by 90° until it is aligned with the second edge of the fitting 4.

The rotation angle can be pre-set to 90°, or it can be determined from the indications of the feeler pin 56. When the rotation is completed the latter bears against the edge of the fitting 4.

After the rotation of the head 7, the gasket 6 is bent in correspondence with the tip of the "V" shaped cut and the two edges thereof are mutually match.

At this point, the phases described above are repeated for all edges of the fitting 4 until the head 7 with a last rotation is brought back on the first edge in correspondence with the edge not yet provided with gasket 6.

The head 7 is then made to advance along the first edge until it reaches the starting point of the gasket 6 already inserted.

The starting point can be determined either through a calculation or through the detection means 52 (for this purpose, for instance, the feeler pin 56 itself can be used).

Similarly to what occurs in proximity to the edges of the fitting 4, when the insertion means 21 are near the starting point, the unit 65 commands the operation of the first cutting means 46 which shear the gasket 6, so that the final point coincides with the initial point.

At this point the insertion of the gasket 6 in the seat 5 is complete, and the head 7 can be brought back to the resting position.

This does not take place, instead, if the fitting 4 has multiple, mutually parallel seats 5 into which the same type of gasket 6 is to be inserted. In this case, the unit 65 commands the vertical displacement of the head 7 until bringing it with the insertion means 21 aligned with another seat 5, whereupon the various phases described for the first seat 5 are repeated.

If instead the gaskets were different, and a second head 7 were present, the first head 7 would return to the resting position, and the second head 7 would be operated in the same manner.

Advantageously, at the end of each cycle the head 7 is rotated by 380° in the opposite direction to its rotation during the insertion, thereby compensating for the torsion accumulated by the hydraulic, pneumatic and electrical connections. This allows to avoid using special junctions to allow a rotation of the connections.

In any case, the actuation of the head 7 when it is distant from the arrest areas (edges, final point, ...) takes place at a greater speed than when it is close thereto.

The present invention achieves important advantages.

In the first place the apparatus 1 for applying gaskets, of the present invention, allows the automatic application of the gaskets on one or more seats 5 present on a fitting 4, with no need for intervention by specialised operators, guaranteeing constant quality over time.

Moreover, said apparatus 1 allows the precise application of the gaskets with no risk of accidental deformations thereof, such as elongation.

This also implies a better durability of the gasket 6 mounted on a fitting 4.

The provision of the "V" shaped cuts in correspondence with the edge allows an excellent adaptation of the gasket 6 to the fitting 4 even in correspondence with the edges.

It should also be noted that the present invention is relatively easy to construct and the cost connected to its implementation is not excessively high.

The invention thus conceived can be subject to numerous modifications and variations, without thereby departing from the scope of the inventive concept.

All components can be replaced with other technically equivalent elements and in practice all materials employed, as well as the shapes and dimensions of the various components, may be any depending on requirements.

## Claims

1. Apparatus for applying gaskets to fittings (4) such as windows and doors having a peripheral seat (5), **characterised in that** it comprises:
- a frame (2);
- a support (3)) operatively associated to the frame (2) in order stably to sustain a fitting (4) whereto the gasket (6) is to be applied;
- at least an insertion head (7) mounted on said frame (2);
- first means (9) for actuating said insertion head (7) on said frame (2) along a first direction parallel to said support (3);
- second means (10) for actuating said head (7) on said frame (2) along a second direction perpendicular to the first direction and parallel to the support (3);
said head (7) comprising
- means (21) for inserting the gasket (6) in said peripheral seat (5) in correspondence with an insertion point (22);
- cutting means for cutting the gasket (6);
said apparatus (1) further comprising:
means (33) for the continuous feeding of a gasket (6) to said insertion means (21);
detection means (52) to determine the position of the head (7) relative to the fitting (4);
means (23) for rotating said head (7) about an axis of rotation perpendicular to said support (3) and passing through said insertion point (22);
an electronic control unit (65) operatively connected to said first and second actuation means (10), to said rotation means (23), to said feeding means (33), to said detection means (52), and to said cutting means, to command the operation of the apparatus (1) according to a pre-defined programming.

2. Apparatus as claimed in claim 1 **characterised in that** said insertion head (7) comprises a load-bearing part (17) connected to said frame (2), and an operative part (18) mounted on the load-bearing part (17), damping means (19) being interposed between the load-bearing part (17) and the operative part (18) to allow the actuation of said operative part (18) relative to said load-bearing part (17) parallel to said support (3).

3. Apparatus as claimed in claim 1 o 2 **characterised in that** said feeding means (33) comprise a support (34) for a reel (35) of gasket (6), and at least a motorised driving roller (36) located upstream of the cutting means with reference to the direction of advance of the gasket (6).

4. Apparatus as claimed in claim 3 **characterised in that** said feeding means (33) further comprise an unwinding reel (41) motorised in synchrony with said driving roller (36), and means (42) for tensioning the gasket (6).

5. Apparatus as claimed in any of the previous claims **characterised in that** said rotation means (23) comprise a motor and allow the rotation of the head (7) according to 90° angles.

6. Apparatus as claimed in any of the previous claims **characterised in that** said first actuation means (9) comprise a first longitudinal guide (11) developing parallel to said first direction and mounted on said frame (2), and a first motor (12), and **in that** said second actuation means (10) comprise a first carriage (13) mounted in sliding fashion on said first guide (11), a second longitudinal guide (14) mounted on said first carriage (13) and developing parallel to said second direction, said head (7) being mounted in sliding fashion on said second guide (14), and a second motor (16) operatively active on said head (7) to move said head (7) according to said second direction; said first motor (12) being operatively active on said first carriage (13) to move said first carriage (13) along said first guide (11).

7. Apparatus as claimed in any of the previous claims **characterised in that** it further comprises third means (26) for actuating said head (7) along a third direction parallel to said axis of rotation.

8. Apparatus as claimed in claim 7 **characterised in that** said third actuation means (26) comprise a fluid operated cylinder.

9. Apparatus as claimed in any of the previous claims **characterised in that** said first and second actuation means (10) comprise respectively a first and a second variable velocity motor (16).

10. Apparatus as claimed in any of the previous claims **characterised in that** said insertion means (21) comprise at least an idle roller fastened to the head (7) with its own axis parallel to the axis of rotation.

11. Apparatus as claimed in any of the previous claims **characterised in that** said detection means (52) comprise a first sensor (53) mounted on said head (7) and operatively active to signal to the unit (65) the presence of the fitting (4) in proximity to the insertion means (21), and a second sensor (55) operatively mounted on said head (7) and operatively active to signal to the unit (65) the reaching of the end of the edge of the fitting (4), during the insertion of the gasket (6) in the seat (5).

12. Apparatus as claimed in claim 11 **characterised in that** said first sensor (53) is constituted by a photoelectric cell (54).

13. Apparatus as claimed in claim 11 o 12 **characterised in that** said second sensor (55) is constituted by a feeler pin (56).

14. Apparatus as claimed in any of the previous claims **characterised in that** it further comprises second cutting means (47) to make a "V" shaped incision on the gasket (6) to be fed to the insertion means (21), positioned in correspondence with the segment of gasket (6) to be applied astride the edge of the fitting (4).

15. Apparatus as claimed in claim 14 **characterised in that** said second cutting means (47) comprise a "V" shaped blade (50) actuated by a second pneumatic cylinder (51).

16. Apparatus as claimed in any of the previous claims **characterised in that** said first cutting means (46) comprise a shear (48) actuated by a first pneumatic cylinder (49).

17. Apparatus as claimed in any of the previous claims **characterised in that** it further comprises at least a second insertion head (7).

18. Apparatus as claimed in any of the previous claims **characterised in that** said electronic control unit (65) is programmed to perform the following operative phases:
moving said head (7) along said second direction from a resting position in correspondence whereto a fitting (4) can be positioned on the support (3), to a pre-set cycle start position;
making said insertion means (21) face said seat (5);
making said head (7) advance along said first direction;
stopping said head (7) when it comes in contact with the fitting (4), the arrival in the condition of contact being signalled by said detection means (52);
feeding the gasket (6) to the insertion means (21);
actuating said head (7) according to said second direction along the first edge until said detection means (52) signal the presence of the first edge downstream of the insertion point (22);
simultaneously to the actuation of the head (7), feeding the gasket (6) to the insertion means (21) at a speed equal to the actuation speed;
when said detection means (52) signal the end of the first edge of the fitting (4), stopping the head (7) with the insertion point (22) in correspondence with the edge of the fitting (4);
rotating said head (7) until it is brought in contact with a second edge of the fitting (4);
repeating said phases of actuating, feeding, stopping and rotating along all the edges of the fitting (4) until bring the head (7) back on the first edge;
making the head (7) advance along the first edge until reaching the starting point of the gasket (6) already inserted;
operating the cutting means to cut the gasket (6); and
bringing the head (7) back to the resting position by means of said first and second actuation means (10) and said rotation means (23).

19. Apparatus as claimed in claims 14 and 18 **characterised in that** said unit (65) is further programmed to perform the operative phase of making, using the second cutting means (47), a "V" shaped cut on the gasket (6) before said phase of rotating said head (7) about said edge of the fitting (4).

20. Apparatus as claimed in claim 18 o 19 **characterised in that** said apparatus (1) is programmed to command a fast actuation of the head (7) when it is distant from the arresting areas, and a slow actuation of the head (7) when it is close to the arresting areas.
